# FASCICULE DE BREVET EUROPEEN

(11) **EP 1 094 973 B1**
(45) Date de publication et mention de la délivrance du brevet: **02.01.2002**
(21) Numéro de dépôt: 99923683.9
(22) Date de dépôt: 08.06.1999
(51) Int. Cl.: B65D 25/28, B62B 3/18, B65G 65/00, A47F 9/04

(54) **SYSTEME EVOLUTIF DE MANUTENTION DES ARTICLES ACHETES AU DETAIL DANS LES MAGASINS DE GRANDE SURFACE**
HANDHABUNGSSYSTEM FÜR ARTIKEL IM EINZELHANDEL DES KAUFHAUSES
EXPANDABLE SYSTEM FOR HANDLING RETAIL ARTICLES IN SUPERMARKETS

(30) Priorité: 09.06.1998 FR 9807866
(43) Date de publication de la demande: 02.05.2001
(73) Titulaire: Lamy, Laurent, 43200 Lapte (FR); Pinatel, Marie-Odile, 43200 Lapte (FR)
(72) Inventeur: Lamy, Laurent, 43200 Lapte (FR); Pinatel, Marie-Odile, 43200 Lapte (FR)
(74) Mandataire: Schmitt, John
(86) Numéro de dépôt international: FR9901336
(87) Numéro de publication internationale: WO9964306

(56) Documents cités:
- EP-A- 0 011 726
- EP-A- 0 308 039
- EP-A- 0 449 248
- WO-A-96/23689
- DE-U- 7 915 537
- DE-U- 9 211 804
- DE-U- 29 600 872
- FR-A- 2 351 033
- FR-A- 2 550 074
- FR-A- 2 562 019
- FR-A- 2 714 009
- GB-A- 2 113 621
- US-A- 3 429 403

## Description

L'invention concerne un système évolutif de manutention des articles achetés au détail dans les magasins de grande surface.

Actuellement, les magasins de grande surface mettent à la disposition de leurs clients des chariots traditionnels constitués d'un châssis, muni de roues pivotantes, solidaire d'un conteneur intégré en fil de fer galvanisé ouvert à sa partie supérieure ; il met aussi à la disposition de ses clients des paniers munis généralement d'une anse articulée escamotable ; le chariot comme le panier sont remplis progressivement par l'acheteur qui prend les articles dans les rayons et les dépose dans le conteneur intégré du chariot traditionnel ou dans le panier ; au moment du paiement les articles sont transférés par l'acheteur manuellement sur un tapis d'alimentation et après enregistrement du prix de l'article, généralement à partir de la lecture d'un code barre, ils sont repris manuellement par l'acheteur et suivant les chaînes de magasins de grande surface, ils sont soit remis en vrac dans le chariot ou le panier, soit regroupés dans des sacs plastiques jetables ou réutilisables avant d'être remis dans le chariot traditionnel ou le panier ; le contenu du chariot ou du panier est ensuite transféré manuellement dans la voiture puis lorsque l'acheteur est arrivé à son domicile, il doit décharger manuellement les produits achetés. Cette façon de procéder induit, au niveau des chaînes de magasins de grande surface et plus particulièrement au niveau des caisses, des pertes de temps parce que le client ne peut notamment à la fois décharger son chariot et le recharger ; elle entraîne aussi des surcoûts car la fourniture de sacs jetables aux clients est très coûteuse à cause notamment d'une freinte importante sur les sacs plastiques jetables parce que les clients en prennent souvent plus que nécessaire ne serait-ce que pour en faire d'autres usages. Les magasins de grande surface qui proposent des sacs réutilisables à titre onéreux supprimant les sacs jetables, n'ont que peu d'arguments pour justifier ce choix, parce qu'ils apportent des contraintes pour le client sans apporter d'avantages significatifs si ce n'est de limiter la pollution.

L'objet de l'invention est de proposer aux magasins de grande surface la promotion d'un système de manutention des articles achetés par les clients apportant à ces derniers un réel avantage et susceptible de se développer par phases de mise en oeuvre successives, adaptées au rythme d'adoption du procédé par la clientèle, tout en restant en permanence compatible avec les systèmes déjà en place dans les magasins de grande surface.

Par les documents US-A-3 429 403 et DE-U-296 00 872 il est connu de remplacer le conteneur intégré unique des chariots traditionnels par plusieurs conteneurs autonomes plus petits et destinés à recevoir les articles achetés qu'ils servent à transporter jusqu'au lieu de stockage au domicile de l'acheteur et éventuellement y servir aussi de moyen de stockage, lesdits conteneurs comportant des moyens de saisie et des moyens de maintien adaptés à des moyens de manoeuvre qui sont utilisés successivement au cours du processus d'achat et de transport des articles achetés par les clients. Le préambule de la revendication 1 est basé sur cet état de la technique.

L'invention a pour but de faciliter le déchargement des conteneurs sur le tapis d'alimentation des caisses du magasin et le rechargement desdits conteneurs depuis le tapis d'évacuation de ces caisses. Ce but est atteint par le système selon la revendication 1. A cet effet, on dispose une plate-forme élévatrice en amont et en aval de la caisse manoeuvrée par un dispositif triangulé à géométrie variable fonctionnant électriquement suivant un cycle prédéterminé, ladite plate-forme étant équipée de courroies transporteuses escamotables amenant les bacs chargés sur les chariots sur le tapis d'alimentation de la caisse, puis reprenant lesdits bacs en bout de chaîne d'évacuation pour les ramener sur les chariots après enregistrement des marchandises qu'ils contiennent.

Sur les dessins annexés :
La figure 1 représente en vue perspective partiellement éclatée un conteneur modulaire selon l'invention.
La figure 2 représente en vue perspective partiellement éclatée un châssis mobile selon l'invention.
La figure 3 représente une tôle métallique découpée permettant d'obtenir par pliage un sous-ensemble d'un châssis mobile selon la figure 2.
La figure 4 représente en vue perspective un châssis mobile selon une variante de l'invention.
La figure 5 représente une vue perspective partiellement éclatée d'un dispositif de déchargement et d'un dispositif de rechargement des châssis mobiles de la figure 2 avec des conteneurs modulaires pour l'enregistrement de leur contenu par la caissière d'un magasin.
Les figure 6A à 6D représentent une vue en élévation d'un dispositif de déchargement suivant les principales phases du cycle de déchargement.

Selon une première version de l'invention, les conteneurs modulaires peuvent être posés sur un châssis mobile, constituant un moyen de manoeuvre, grâce, par exemple, à des rampes, solidaires du conteneur modulaire, venant en appui sur des supports solidaires du châssis mobile ; le client emmène le châssis mobile supportant l'ensemble des conteneurs modulaires dans les rayons comme il le faisait précédemment avec le chariot traditionnel et il remplit successivement les conteneurs modulaires avec les articles qu'il veut acheter ; de l'ordre de deux à cinq conteneurs modulaires sont généralement nécessaires pour contenir l'ensemble des achats ; au niveau de la caisse les conteneurs modulaires sont enlevés du châssis mobile et, par exemple, posés manuellement, grâce à des poignées placées latéralement et en opposition par rapport au conteneur modulaire ou à une anse articulée escamotable, constituant un moyen de saisie, sur le tapis roulant de la caisse enregistreuse pour que leur contenu soit enregistré par la caissière ; pour des raisons de fiabilité de l'exactitude de la transaction commerciale, le contenu est généralement transféré d'un conteneur modulaire vers un autre conteneur modulaire initialement vide en faisant passer par exemple chaque produit devant un lecteur optique de codes barres ; chaque conteneur modulaire dont le contenu a été enregistré est replacé sur le châssis mobile et amené jusqu'à la voiture du client dans le coffre de laquelle les conteneurs modulaires sont, par exemple, déchargés manuellement ; un second châssis mobile peut être utilisé, par exemple, au domicile du client pour amener les conteneurs modulaires de la voiture jusqu'au lieu de stockage. Dans cette version de l'invention le châssis mobile peut être tout simplement un chariot traditionnel ; les conteneurs modulaires peuvent être déposés au fond du conteneur intégré, et/ou suspendus sur la partie supérieure des bords verticaux de ce dernier qui servent de support, aux conteneurs modulaires, grâce à des rampes ; les conteneurs modulaires peuvent aussi être placés directement sur le châssis du chariot traditionnel sous le conteneur intégré ; le chariot traditionnel étant en fil de fer galvanisé, la manipulation à la main des conteneurs modulaires peut être dangereuse pour les mains surtout lorsque les poignées sont placées latéralement et en opposition par rapport au conteneur modulaire.

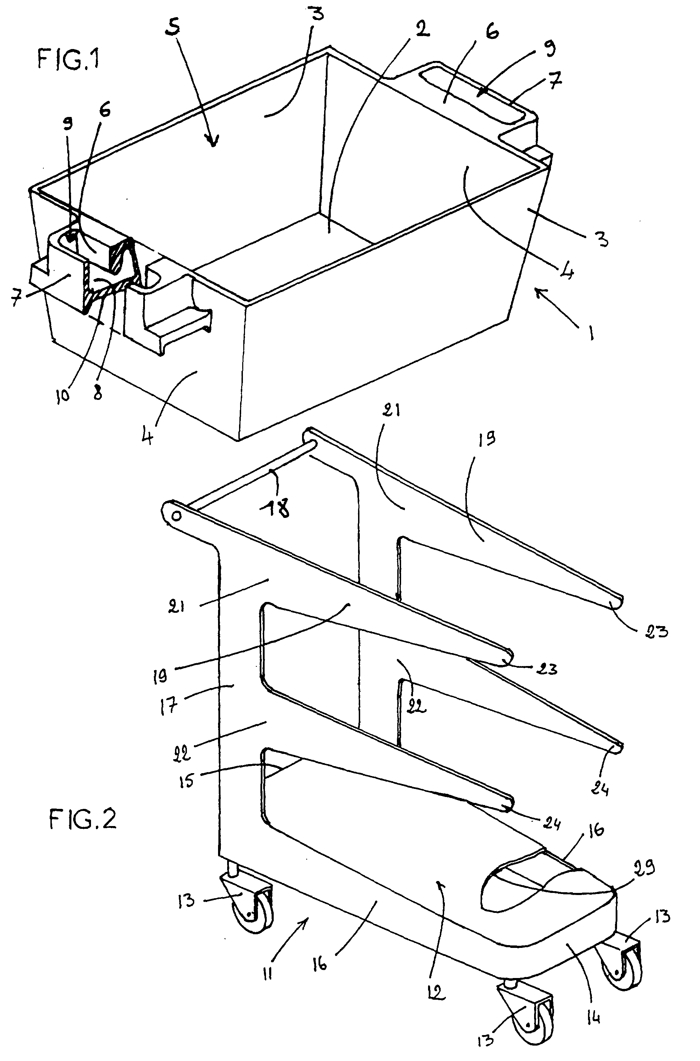

Dans une version préférée de l'invention, le conteneur modulaire est un bac 1, en matière thermoplastique de préférence transparente, de forme sensiblement parallélépipèdique, comportant un fond 2 et deux grandes parois latérales 3 et deux petites parois latérales 4 opposées deux à deux, tandis que la face supérieure est largement ouverte et constitue l'ouverture de chargement 5 du bac modulaire 1 ; le volume intérieur du bac modulaire 1 est de préférence de l'ordre de vingt à trente litres ; les grandes et petites parois latérales 3 et 4 présentent de préférence une dépouille suffisante pour permettre aux bacs modulaires 1 de s'emboîter les uns dans les autres lorsqu'ils sont vides. Deux poignées 6, de manutention manuelle, sont fixées de préférence sur les deux petites parois latérales 4 dans la partie située au voisinage de l'ouverture de chargement 5 ; elles sont de préférence de forme cylindrique avec les génératrices orientées parallèlement au plan de l'ouverture de chargement 5 et au plan de la petite paroi latérale 4 à laquelle elles sont fixées ; elles sont situées de préférence au voisinage du bord de l'ouverture de chargement 5 et sensiblement au milieu de la paroi latérale 4 pris dans le sens parallèle au plan de l'ouverture de chargement 5. Les poignées 6 sont largement entourées d'une protection latérale 7 et inférieure 8 du dos de la main et des doigts tandis que la partie supérieure 9 est ouverte pour permettre l'introduction de la main et que la poignée 6 présente, de préférence une section en forme de goutte pour faciliter le positionnement des doigts autour; dans ces conditions la protection latérale 7 et la protection inférieure 8 associées à la poignée 6 forment une sorte de moufle rigide protégeant les mains au cours des manutentions. La face extérieure de la protection inférieure 8 est associée à des rampes 10 destinées à venir notamment en appui sur les bords verticaux du conteneur intégré servant de support comme précédemment décrit afin de maintenir le conteneur modulaire 1 suspendu.
Dans un perfectionnement de cette version de l'invention, le châssis mobile est spécifique à l'emploi de conteneurs modulaires de manière que chaque conteneur modulaire ait une place prévue à l'avance de manière à pouvoir ensuite en automatiser la manutention ; à titre d'exemple non limitatif, le châssis mobile 11 (fig.2) est destiné à l'emploi des bacs modulaires 1 que l'on vient de décrire ; il comporte à sa base une plate-forme 12, sensiblement horizontale, de préférence en forme de trapèze isocèle supportant des roues directrices 13 à chacun des angles ; la petite base du trapèze isocèle correspond à la partie avant 14 du châssis mobile 11 et la grande base à la partie arrière 15, les deux autres côtés du trapèze isocèle, constituant les parties latérales 16 ; cette forme trapézoïdale est choisie pour permettre l'emboîtage des châssis mobiles 11 les uns dans les autres comme cela est réalisé systématiquement avec les chariots traditionnels en employant des techniques parfaitement connues; deux montants verticaux 17 sont fixés au voisinage des extrémités de la partie arrière 15 et sont reliés entre eux de préférence à leur sommet par une barre de manoeuvre 18 horizontale servant de prise pour les mains pour la manoeuvre du châssis mobile 11 ; cette barre de manoeuvre 18 peut être déportée vers l'arrière du châssis mobile 11 pour faciliter les manoeuvres comme cela est fait sur les chariots traditionnels. Des couples de bras horizontaux 19 et 20 rigides, sensiblement rectilignes et sensiblement parallèles, sont ancrés par leur extrémité d'ancrage 21 et 22 chacun sur l'un des montants verticaux 17 à la même hauteur ; ils sont destinés à servir d'appui aux bacs modulaires 1 ; leur écartement correspond sensiblement à la distance séparant les rampes 10, solidaires des poignées 6 du même bac modulaire 1, de manière que, lorsqu'on glisse le bac modulaire 1 entre deux bras horizontaux d'un même couple de bras horizontaux 19 ou 20, les rampes 10 puissent venir glisser et s'appuyer sur ces derniers afin de supporter le bac modulaire 1 : les couples de bras horizontaux 19 et 20 sont superposés à une distance supérieure à la hauteur d'un bac modulaire 1 pour laisser un espace libre entre deux bacs modulaires 1 lorsqu'ils sont superposés ; de préférence les bras horizontaux d'un même couple de bras horizontaux 19 ou 20 ne sont pas reliés entre eux à leur extrémité 23 ou 24 opposée à leur extrémité d'ancrage 21 ou 22 pour permettre à l'utilisateur d'introduire le bac modulaire 1 entre le couple de bras horizontaux 19 ou 20 concerné et en faisant glisser les rampes 10 sur la partie supérieure des couples de bras horizontaux pour amener le bac modulaire 1 à sa place ; les couples de bras horizontaux 19 et 20 sont conçus en général pour recevoir au maximum soit un seul bac modulaire 1 soit deux bacs modulaires 1 ; dans le premier cas on peut avoir de préférence trois couples de bras horizontaux superposés recevant chacun un bac modulaire soit un maximum de trois bacs modulaires ; dans le second cas on peut avoir de préférence deux couples de bras horizontaux susceptibles de recevoir chacun deux bacs modulaires soit au maximum quatre bacs modulaires.

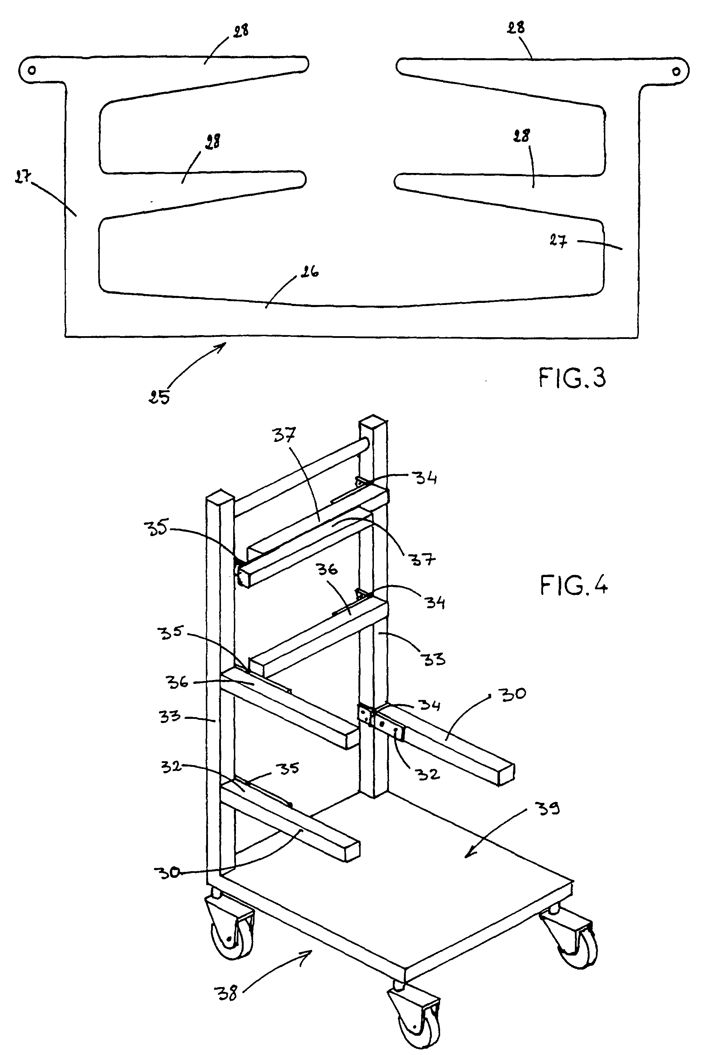

A titre d'exemple non limitatif, dans une version de l'invention le châssis mobile 11 est réalisé à partir d'une tôle d'aluminium épaisse de plusieurs millimètres, dans laquelle sont découpés divers éléments du châssis mobile qui ne forment qu'une seule pièce 25 (fig.3) et qui est ensuite pliée ; la découpe comprend le pourtour de la plate-forme 12 qui est l'élément de liaison de l'ensemble et qui se présente sensiblement comme une bande 26 aux extrémités de laquelle sont découpés les montants verticaux 27, perpendiculairement au sens principal de la bande 26, les bras horizontaux 28 étant découpés de manière à rester solidaires des montants verticaux 27 par continuité de la tôle d'aluminium et tournés vers l'intérieur par rapport aux montants verticaux 27 de manière à rester sensiblement parallèles au sens principal de la bande 26 ; il suffit de plier la partie centrale de la bande 26 formant le pourtour, en pliant la tôle d'aluminium perpendiculairement au sens principal de la bande 26 en forme de « U » de manière que la base du « U » constitue la partie avant 14 (fig.2) de la plate-forme 12 du châssis mobile 11 ; les branches parallèles du « U » constituent les parties latérales 16, de la plate-forme 12, dont les extrémités forment la partie arrière 15 supportant les montants verticaux 17 avec les couples de bras horizontaux 19 et 20 associés ; après pliage, l'angle formé par les bras des couples de bras horizontaux 19 et 20 est le même que celui formé par les parties latérales 16 de la plate-forme 12 ; si on veut garder la possibilité de réaliser l'emboîtage des châssis mobiles 11, cet angle doit être choisi suffisamment grand pour que l'emboîtage des châssis mobiles 11 soit possible, compte tenu de l'épaisseur de la tôle d'aluminium, et suffisamment petit pour que la largeur des rampes 10 des bacs modulaires 1 puisse absorber la variation d'écartement des couples de bras horizontaux 19 et 20 ; la barre de manoeuvre 18 reliant les deux montants verticaux 17 au voisinage de leur sommet contribue au raidissement de l'ensemble ; on peut aussi placer des entretoises entre les bras horizontaux du couple de bras horizontaux 20 situés à proximité de la plate-forme 12 pour diminuer les contraintes au flambage des montants verticaux 17,

Pour améliorer le raidissement de l'ensemble, la plate-forme 12 peut être recouverte d'une tôle 29, s'appuyant sur les parties avant 14 et latérales 16, sans toutefois dépasser à l'extérieur de leur pourtour ; il suffit que cette tôle 29 soit légèrement inclinée vers le sol en allant de la partie arrière 15 vers la partie avant 14, compte tenu de son épaisseur pour ne plus gêner l'emboîtage des châssis mobiles 11.

Dans une variante, la plate-forme 12 comporte deux tôles articulées au niveau des parties latérales 16 suivant des charnières horizontales qui peuvent être en position abaissée ou relevée ; en position abaissée elles se rejoignent suivant sensiblement la ligne médiane du trapèze isocèle formant la plate-forme 12 et viennent à la fois s'arc-bouter légèrement entre elles et se crocheter de manière à empêcher l'ouverture par déformation du châssis mobile 11 à hauteur de la partie arrière 15 lorsqu'on le met en charge ; ces deux tôles articulées sont relevées au niveau de la partie arrière 15 de manière à constituer des glissières de relevage des tôles articulées lorsqu'on emboîte deux châssis mobiles 11 l'un dans l'autre ; lorsqu'on présente la partie avant 14 de la plate-forme 12 du châssis mobile 11 à emboîter sensiblement dans l'axe de la partie arrière 15 du châssis mobile 11 précédent, elle s'appuie sur les glissières de relevage des tôles articulées de ce dernier qui s'escamotent en se relevant en permettant l'emboîtage des deux châssis mobiles 11 ; cette façon de procéder permet d'avoir au niveau de la plate-forme 11 une surface horizontale mieux susceptible de porter une charge simplement posée qu'une surface inclinée.

A titre d'exemple non limitatif, dans une variante de conception, un châssis mobile 38 comporte des couples de bras horizontaux 30, 36 et 37 (fig.4), dont la longueur est inférieure à la largeur de la partie arrière 31 de la plate-forme 39, fixés à leur extrémité 32 sur les montants verticaux 33 par des charnières 34 et 35 orientées sensiblement parallèlement à la direction des montants verticaux 33 pour que les couples de bras horizontaux 30 puissent se replier sensiblement parallèlement au plan que forment ces derniers ; cette façon de procéder s'adapte bien au cas où il n'y a qu'un seul bac modulaire par couple de bras horizontaux 30,36,37 et permet de faciliter son rangement éventuel dans un coffre de voiture.

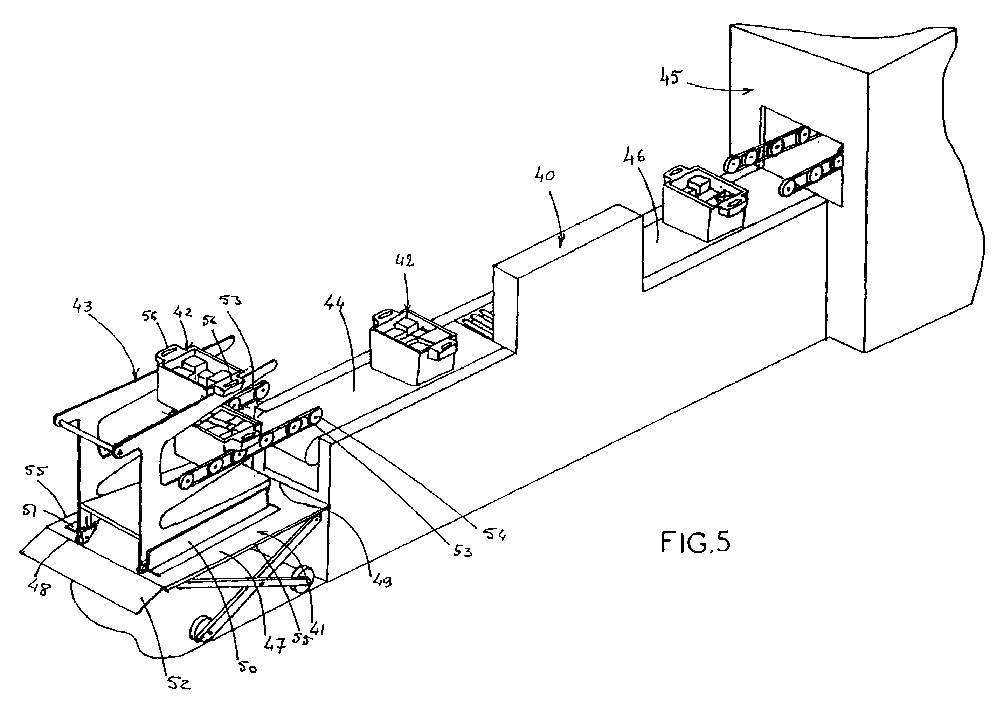

Dans un perfectionnement de l'invention (fig.5), on place en amont de la caisse 40 un dispositif de déchargement 41 automatique des bacs modulaires 42 permettant de les transférer du châssis mobile 43 sur le tapis d'alimentation 44 de la caisse 40 ; l'acheteur place son châssis mobile 43 chargé de bacs modulaires 42 dans un logement approprié du dispositif de déchargement 41 et lorsque ce dernier a prélevé les bacs modulaires 42 il sort le châssis mobile 43 vide du logement approprié et va le placer de l'autre côté de la caisse 40, dans le logement approprié d'un dispositif de rechargement 45 des bacs modulaires 42 très semblable à celui de déchargement après enregistrement des articles qu'il contient ; lorsqu'un bac modulaire arrive sur le tapis d'alimentation 44, la caissière transfère les achats du bac modulaire situé à sa droite, sur le tapis d'alimentation, vers un bac modulaire situé à sa gauche sur un tapis d'évacuation 46, en enregistrant le prix des articles au passage ; lorsqu'un bac modulaire est vide à droite, elle le transfère à sa gauche après avoir déplacé le bac modulaire qu'elle vient de remplir en faisant tourner le tapis d'évacuation 46 et en approchant le bac modulaire suivant en faisant tourner le tapis d'alimentation 44 ; les bacs modulaires 42 pénètrent dans le dispositif de rechargement 45 et sont replacés sur le chariot mobile 43. Une fois que l'acheteur a réglé la facture il peut retirer le châssis mobile 43 avec son chargement du dispositif de rechargement 45.

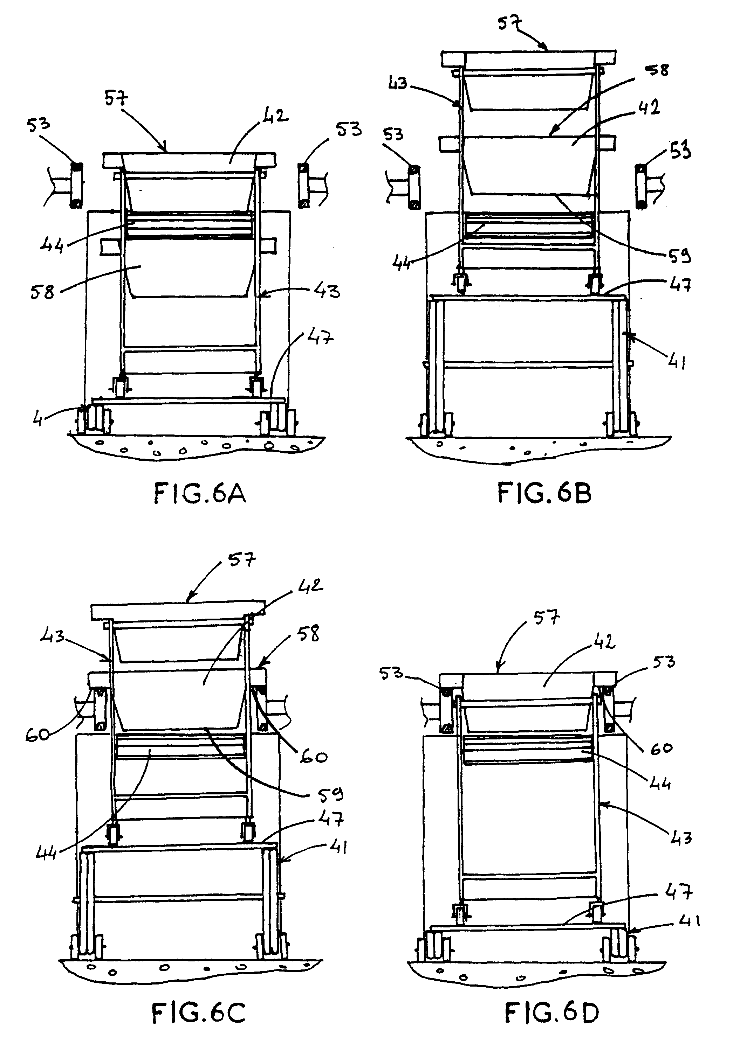

Dans ce qui suit, on décrit les grandes lignes d'un dispositif de déchargement 41 en ne prenant en compte dans la description que des fonctions essentielles sans entrer dans le détail, étant entendu qu'il y a une multitude de façon de les réaliser. A titre d'exemple non limitatif, le dispositif de déchargement 41 est constitué d'une plate-forme élévatrice 47 du châssis mobile 43, de forme sensiblement rectangulaire ; les petits côtés sont situés d'une part à l'arrière 48 du côté de l'entrée du châssis mobile 43 et d'autre part à l'avant 49 du côté de l'évacuation des bacs modulaires 42 sur le tapis d'alimentation 44 de la caisse 40 ; la plate-forme élévatrice 47 comporte des rails de guidage 50 et 51 permettant de positionner le châssis mobile 43 avec précision par rapport à la plate-forme élévatrice 47 situés sensiblement parallèlement aux grands côtés 55 de la plate-forme élévatrice 47 ; la plate-forme élévatrice 47 comporte à l'arrière une rampe d'accès 52 pour le châssis mobile 43 et l'avant 49 est situé au voisinage du tapis d'alimentation 44 ; cette plate-forme élévatrice 47 est par exemple manoeuvrée par un dispositif triangulé à géométrie variable fonctionnant électriquement suivant un cycle prédéterminé ; de chaque côté de la plate-forme élévatrice 47 à hauteur convenable on trouve, par exemple, une courroie transporteuse 53, motorisée, reposant sur des galets 54 à sa partie supérieure, orientée parallèlement aux grands côtés 55 de la plate-forme élévatrice 47 et susceptible de s'escamoter horizontalement dans un sens perpendiculaire à ces mêmes grands côtés 55 afin de laisser le passage libre au bac modulaires 42 dont les poignées 56 dépassent latéralement du châssis mobile 43; les courroies transporteuses 53 sont symétriques l'une par rapport à l'autre et d'une longueur suffisante pour amener les bacs modulaires 42 sur le tapis d'alimentation 44 avec lequel elles sont de préférence synchronisées Initialement, la plate-forme élévatrice 47 (fig.6A) est en position basse et les courroies transporteuses 53 sont escamotées ; on introduit sur la plate forme élévatrice 47 le châssis mobile 43 chargé de deux étages haut et bas 57 et 58 de deux bacs modulaires 42 et on enclenche le cycle de déchargement ; la plate-forme élévatrice 47 (fig.6B) s'élève jusqu'à ce que le fond 59 des bacs modulaires 42 de l'étage du bas 58 soit au-dessus du niveau du tapis d'alimentation 44 ; les courroies transporteuses 53 (fig.6C) se mettent alors en place sous les rampes 60 des bacs modulaires 42 de l'étage du bas 58 et la plate-forme élévatrice 47 s'abaisse suffisamment pour que les rampes 60 viennent en appui sur les courroies transporteuses 53 et se décollent des couples de bras horizontaux du châssis mobile 43 ; le fond 59 des bacs modulaires 42 de la rangée du bas 58 se trouve alors sensiblement à la hauteur du tapis d'alimentation 44 ; lorsque le tapis d'alimentation 44 entre en fonctionnement les courroies transporteuses 53, qui ont une vitesse linéaire sensiblement égale à celle du tapis d'alimentation 44, transportent les bacs modulaires 42 progressivement sur ce dernier ; lorsque l'étage du bas 58 (fig.6D) du châssis mobile 43 est vide, la plate-forme élévatrice 47 s'abaisse jusqu'à sa position initiale, en laissant les bacs modulaires 42 de l'étage supérieur 57 en appui sur les courroies transporteuses 53 en attente d'être transférés sur le tapis d'alimentation 44 ; le châssis mobile 43 peut alors être retiré de la plate-forme élévatrice 47 pour être emmené vers le dispositif de rechargement 45 et lorsque les bacs modulaires 42 de l'étage supérieur 57 ont été transférés sur le tapis d'alimentation 44, les courroies transporteuses 53 sont escamotées ; le dispositif de déchargement 41 est en mesure de recevoir un nouveau châssis mobile 43 chargé de bacs modulaires 42. Lorsque l'enregistrement des articles achetés est effectué, le rechargement des bacs modulaires 42 se fait avec un dispositif de rechargement 45 semblable à celui de déchargement mais fonctionnant à l'envers en chargeant d'abord l'étage du haut 57 puis l'étage du bas 58. On décrit un dispositif de chargement et de déchargement automatique, mais on peut aussi utiliser des dispositifs semi-automatiques ou manuels tout en restant dans le domaine de l'invention ; notamment, on peut imaginer par exemple disposer de bacs modulaires identifiés par un code barre ou une puce électronique solidaire des bacs modulaires et communiquant par l'intermédiaire d'une antenne hertzienne, ainsi que d'un carrousel de tapis de transport de bacs modulaires accessible en de nombreux points du magasin de manière à pouvoir y déposer les bacs modulaires une fois qu'ils sont remplis ; le contenu de chacun des bacs modulaires est enregistré au fur et à mesure que ces derniers sont déposés dans le carrousel et le montant des achats contenus dans le bac modulaire est, par exemple, aussi enregistré dans la puce électronique ; les bacs sont triés par client et stockés en attente que le client ait fini ses courses ; lorsque ce dernier se présente à la caisse on appelle les bacs modulaires qu'il a déposés sur le carrousel et il n'a plus qu'à payer et recharger les bacs modulaires sur un châssis mobile sans qu'il y ait d'attente significative. Cette dernière description sommaire est destinée à montrer l'étendue du champ d'application de l'invention et une solution à laquelle on peut arriver progressivement par des évolutions successives étalées dans le temps.

## Revendications

1. Système évolutif de manutention des articles achetés au détail dans les magasins de grande surface, utilisant des chariots (11,38,43) équipés de roues pivotantes (13) et supportant des conteneurs (1,42) servant à transporter les articles achetés jusqu'aux caisses d'enregistrement à tapis d'alimentation et d'évacuation, puis jusqu'au domicile de l'acheteur en servant aussi de moyens de stockage, lesdits conteneurs comportant des poignées de manutention (6) et des rampes de maintien (10,60) sur les chariots associés à des dispositifs de transfert (41,45) autorisant le déchargement des conteneurs (1,42) sur le tapis (44) d'alimentation des caisses du magasin et le rechargement desdits conteneurs (1,42) sur les chariots depuis les tapis d'évacuation (46) desdites caisses du magasin, **caractérisé en ce que** les dispositifs de déchargement (41,45) sont constitués, d'une part d'une plate-forme élévatrice (47) manoeuvrée par un système triangulé à géométrie variable fonctionnant suivant un cycle prédéterminé et comportant des rails de guidage (50,51) permettant de positionner le chariot (11,38,43) chargé de conteneurs (42) répartis en un étage haut (57) et un étage bas (58), d'autre part de courroies transporteuses (53) s'escamotant lorsque la plate-forme élévatrice (47) s'élève à partir d'une position initiale basse jusqu'à une position haute et se plaçant sous les rampes (60) des conteneurs (42) de l'étage du bas (58), tandis que la plate-forme élévatrice (47) s'abaisse suffisamment pour que les rampes (60) viennent en appui sur les courroies transporteuses (53) et se décollent des couples de bras horizontaux du chariot (43) amenant les conteneurs (42) de l'étage du bas (58) sur le tapis d'alimentation (44), la plate-forme élévatrice (47) s'abaissant ensuite jusqu'à sa position initiale en laissant les conteneurs (42) de l'étage supérieur (57) en appui sur les courroies transporteuses (53) afin d'être transférés sur le tapis d'alimentation (44), les courroies transporteuses (53) étant ensuite escamotées en vue du cycle suivant.

2. Système suivant la revendication 1, **caractérisé en ce que** les conteneurs (1.42) sont des bacs en matière thermoplastique, de forme sensiblement parallélépipédique comportant un fond (2), une face supérieure qui est largement ouverte et constitue l'ouverture de chargement (5) du bac (1), deux grandes parois latérales (3) et deux petites parois latérales (4) sur lesquelles sont fixées deux poignées (6), de forme cylindrique avec les génératrices orientées parallèlement au plan de l'ouverture de chargement (5) et au plan de la petite paroi latérale (4) et une section en forme de goutte pour faciliter le positionnement des doigts autour, les poignées (6) étant largement entourées d'une protection latérale (7) et inférieure (8) du dos de la main et des doigts, tandis que la partie supérieure (9) est ouverte pour permettre l'introduction de la main, formant une sorte de moufle rigide protégeant les mains au cours des manutentions, la face extérieure de la protection inférieure (8) étant associée aux rampes (10).

3. Système suivant la revendication 1, **caractérisé en ce que** les chariots (11,38,43) sont des châssis mobiles destinés à l'emploi des conteneurs (1), comportant à leur base une plate-forme (12) supportant des roues directrices (13) et formés d'une partie avant (14), d'une partie arrière (15) et de parties latérales (16), deux montants verticaux (17) étant fixés au voisinage des extrémités de la partie arrière (15) supportant des couples de bras horizontaux (19,20) constituant des moyens de support des conteneurs (1) ancrés chacun par leurs extrémités (21,22) sur l'un des montants verticaux (17).

4. Système suivant la revendication 3, **caractérisé en ce que** les châssis mobiles (11) sont réalisés à partir d'une tôle d'aluminium épaisse de plusieurs millimètres dans laquelle sont découpés divers éléments qui ne forment qu'une seule pièce (25) pliée en forme de «U» pour former le pourtour de la plate-forme (12), les montants verticaux (17) et les couples de bras horizontaux (19,20), la plate-forme (12) étant recouverte soit d'une tôle (29) s'appuyant sur les parties avant (14) et latérales (16), soit de deux tôles articulées au niveau des parties latérales (16) suivant des charnières horizontales, pouvant être en position abaissée ou relevée grâce à des glissières de relevage situées au niveau de la partie arrière (15).

5. Système suivant les revendications 3 et 4, **caractérisé en ce que** les châssis mobiles (38) comportent chacun des couples de bras horizontaux (30,36,37). qui sont fixés à leur extrémité (32) sur les montants verticaux (33) par des charnières (34,35) pour autoriser le repliage desdits bras.

6. Système suivant la revendication 1, **caractérisé en ce qu'**un carrousel de tapis de transport de conteneurs (1,42), accessible en de nombreux points du magasin, permet de déposer des conteneurs identifiables, une fois qu'ils sont remplis, le contenu de chacun d'eux étant enregistré au fur et à mesure que ces derniers sont déposés dans le carrousel. les conteneurs étant ensuite triés par client et stockés en attente d'être rechargés sur un chariot (11,38,43) après paiement.

## Patentansprüche

1. Erweiterbares Fördersystem für einzeln in einem Großhandel gekaufte Artikel unter Einsatz von Einkaufswagen (11, 38, 43), die mit schwenkbaren Rädern (13) ausgestattet sind und Behälter tragen (1, 42), die zum Transport der gekauften Artikel bis zu den Registrierkassen mit Förder- und Austragband und anschließend bis zur Wohnung des Käufers dienen und dabei auch als Lagermittel dienen, wobei besagte Behälter Haltegriffe (6) und Halterampen (10, 60) auf den Einkaufswagen umfassen, die Fördervorrichtungen (41, 45) zugeordnet sind, die das Entladen der Behälter (1, 42) auf dem Förderband (44) der Ladenkassen und das Wiederaufladen besagter Behälter (1, 42) auf die Einkaufswagen vom Austragband (46) besagter Ladenkassen erlauben, **dadurch gekennzeichnet, daß** die Entladevorrichtungen (41, 45) einerseits aus einer Hebebühne (47) gebildet werden, die durch ein aus Dreiecken zusammengesetztes System mit variabler Geometrie gemäß einem vorbestimmten Zyklus arbeiten und Führungsschienen (50, 51) umfassen, die die Positionierung des Einkaufswagens (11, 38, 43) erlauben, der mit Behältern (42) beladen ist, die auf eine obere Etage (57) und eine untere Etage (58) verteilt sind, andererseits aus einem Transportband (53), das einklappt, wenn die Hebebühne (47) sich aus einer ursprünglichen niedrigen bis zu einer hohen Position erhebt und sich unter die Rampen (60) der Behälter (42) der unteren Etage (58) plaziert, während die Hebebühne (47) sich ausreichend absenkt, damit die Rampen (60) sich auf die Transportbänder (53) abstützen und sich von den horizontalen Armpaaren des Einkaufswagens (43) ablösen, was die Behälter (42) von der unteren Etage (58) auf das Förderband (44) bringt, wobei die Hebebühne (47) sich anschließend bis zu ihrer ursprünglichen Position absenkt und dabei die Behälter (42) von der oberen Etage (57) aufstützend auf den Transportbändern (53) läßt, damit sie auf dem Förderband (44) weiterbefördert werden, wobei die Transportbänder (53) anschließend für den nächsten Zyklus eingeklappt werden.

2. System gemäß Anspruch 1, **dadurch gekennzeichnet, daß** die Behälter (1, 42) Kästen aus thermoplastischem Material in deutlich parallelflacher Form sind, umfassend einen Boden (2), eine Oberseite, die weit offen ist und die Ladeöffnung (5) des Kastens (1) bildet, zwei große Seitenwände (3) und zwei kleine Seitenwände (4), auf denen zwei Griffe (6) in zylindrischer Form befestigt sind, deren Mantellinien parallel zur Ebene der Ladeöffnung (5) und zur Ebene der kleinen Seitenöffnung (4) ausgerichtet sind, und einem Abschnitt in Tropfenform zur Erleichterung der Positionierung der Finger um die Handgriffe (6), die breit mit einem seitlichen (7) und einem unteren (8) Schutz des Handrückens und der Finger umgeben ist, während der obere Teil (9) offen ist, um das Einführen der Hand zu erlauben, wobei eine Art fester Handschuh gebildet wird, der die Hände im Verlauf der Arbeiten schützt, wobei die Außenseite des inneren Schutzes (8) den Rampen (10) zugeordnet ist.

3. System gemäß Anspruch 1, **dadurch gekennzeichnet, daß** die Einkaufswagen (11, 38, 43) mobile Gehäuse sind, die zum Einsatz der Behälter (1) bestimmt sind, die an ihrer Basis eine Plattform (12) umfassen, die Führungsräder (13) tragen und aus einem Vorderteil (14), einem Hinterteil (15) und Seitenteilen (16) gebildet werden, wobei zwei vertikale Ständer (17) in der Umgebung der äußeren Enden des Hinterteils (15) befestigt sind, die die horizontalen Armpaare (19, 20) tragen, die die Stützmittel der Behälter (1) bilden, die jeder für sich durch ihre äußeren Enden (21, 22) auf einem der vertikalen Ständer (17) verankert sind.

4. System gemäß Anspruch 3, **dadurch gekennzeichnet, daß** die mobilen Gehäuse (11) aus einem mehrere Millimeter starken Aluminiumblech realisiert sind, aus dem verschiedene Elemente ausgeschnitten sind, die ein einziges Stück (25) bilden, das in U-Form geknickt ist, um den Außenumfang der Plattform (12) zu bilden, wobei die vertikalen Ständer (17) und die horizontalen Armpaare (19, 20) , die Plattform (12) entweder von einem Blech (29) abgedeckt werden, das sich auf die Vorderteile (14) und Seitenteile (16) aufstützt, oder von zwei Blechen, die auf der Höhe der Seitenteile (16) gemäß horizontalen Scharnieren artikuliert sind, die dank Hebeschienen, die sich auf der Höhe des Hinterteils (15) befinden, in abgesenkter oder in erhöhter Position sein können.

5. System gemäß Anspruch 3 und 4, **dadurch gekennzeichnet, daß** die mobilen Gehäuse (38) jedes horizontale Armpaare (30, 36, 37) umfassen, die an ihren äußeren Enden (32) auf den vertikalen Ständern (33) durch Scharniere (34, 35) befestigt sind, um das Knicken besagter Arme zu erlauben.

6. System gemäß Anspruch 1, **dadurch gekennzeichnet, daß** ein Transportbandkarussell für die Behälter (1, 42), die an zahlreichen Punkten des Geschäfts erreichbar sind, das Abstellen identifizierbarer Behälter erlaubt, sobald sie vollgeladen sind, wobei der Inhalt eines jeden beim Abstellen letzterer im Karussell registriert werden, wobei die Behälter anschließend nach Kunden sortiert und gelagert werden, bis sie nach dem Bezahlen auf einen Einkaufswagen (11, 38, 43) geladen werden.

## Claims

1. Open-ended system for handling articles bought retail in large stores and using trolleys (11,38,43) equipped with pivoting wheels (13) and supporting containers (1, 42) used to transport the items bought to the feed and evacuation belt cash registers and then to the house of the buyer by also using storage means, said containers comprising carrying handles (6) and support ramps (10, 60) on the trolleys associated with transfer devices (41, 45) authorising unloading of the containers (1, 42) onto the feed belts (44) of the cash-desks of the store and the reloading of said containers (1, 42) onto the trolleys from the evacuation belts (46) of said cash-desks of the store, **characterised in that** the unloading devices (41, 45) are firstly constituted by a lifting platform (47) controlled by a variable geometry triangulated system functioning according to a predetermined cycle and comprising guide rails (50, 51) for positioning the trolley (11, 38, 43) loaded with containers (42) divided into a top storey (57) and a lower storey (58), and secondly by belt conveyors (53) retracting when the lifting platform (47) lifts up from an initial lower position up to an upper position and moving under the ramps (60) of the containers (42) from the bottom storey (58), whereas the lifting platform (47) lowers sufficiently so that the ramps (60) are in support on the belt conveyors (53) and separate from the pairs of the horizontal arms of the trolley (43) bringing the containers (42) from the bottom storey (58) onto the feed belt (44), the lifting platform (47) then lowering down to its initial position, thus leaving the containers (42) of the upper storey (57) in support on the belt conveyors (53) so as to be transferred onto the feed belt (44), the conveyors belts (53) then being retracted for the next cycle.

2. System according to claim 1, **characterised in that** the containers (1, 42) are thermoplastic boxes having an approximately parallelepiped shape comprising a bottom (2), one upper face which is mostly open and constitutes the loading opening (5) of the box (1), two large.side walls (3) and two small side walls (4) to which two cylindrical handles (6) are secured with generating lines orientated parallel to the plane of the loading opening (5) and to the plane of the small side wall (4) and a tear shape section for facilitating the positioning of the fingers around the handles (6) basically surrounded by a device for the side (7) and lower (8) protection of the back of the hand and fingers, whereas the upper portion (9) is open so as to allow the hand to be inserted and forming a sort of rigid mitten protecting the hands during handling, the outer face of the lower protection device (8) being associated with the ramps (10).

3. System according to claim 1, **characterised in that** the trolleys (11, 38, 43) are mobile frames intended for the use of containers (1) comprising at their base a platform (12) supporting guiding wheels (13) and formed on a front portion (14), a rear portion (15) and side portions (16), two vertical uprights (17) being fixed close to the extremities of the rear portion (15) supporting pairs of horizontal arms (19, 20) constituting means for supporting the containers (1) each anchored via their extremities (21, 22) onto one of the vertical uprights (17).

4. System according to claim 3, **characterised in that** the mobile frames (11) are embodied from an aluminium sheet several millimetres thick in which various elements are cut so as to form a single piece (25) folded into the shape of a "U" so as to form the circumference of the platform (12), the vertical uprights (17) and the pairs of horizontal arms (19, 20), the platform (12) being covered either with a plate (29) resting on the front (14) and side (16) portions, or two plates joined to the side portions (16) along horizontal hinges able to be in a lowered, or lifted up position by means of lifting slides situated at the level of the rear portion (15).

5. System according to claims 3 and 4, **characterised in that** the mobile frames (38) each comprise pairs of horizontal arms (30, 36, 37) which are fixed at their extremity (32) to the vertical uprights (33) by hinges (34, 35) to permit the folding of said arms.

6. System according to claim 1, **characterised in that** a container transport belt carrousel (1, 42) accessible at many points in the store makes it possible to remove the identifiable containers once they are filled, the contents of each of them being recorded as and when the latter are removed form the carrousel, the containers then being sorted per customer and stored on stand-by to be reloaded onto a trolley (11, 38, 43) after payment.
